# EUROPEAN PATENT SPECIFICATION

(11) **EP 4 123 211 B1**
(45) Date of publication and mention of the grant of the patent: **09.09.2026**
(21) Application number: 20937864.5
(22) Date of filing: 22.10.2020
(51) Int. Cl.: B29D 99/00, B21D 47/00, B31D 3/02, B33Y 80/00, E04B 1/74

(54) **FLEXIBLE HONEYCOMB STRUCTURE AND MANUFACTURING METHODS THEREFOR**
FLEXIBLE WABENSTRUKTUR UND HERSTELLUNGSVERFAHREN DAFÜR
STRUCTURE EN NID D'ABEILLE SOUPLE ET PROCÉDÉS DE FABRICATION

(30) Priority: 26.05.2020 CN 202010456879
(43) Date of publication of application: 25.01.2023
(73) Proprietor: Beijing Ander Technologies, Beijing 101318 (CN); Maanshan MAT Aviation Manufacturing Co., Ltd., Ma'anshan, Anhui 243000 (CN)
(72) Inventor: ZHENG, Ligang, Beijing 101318 (CN); PAN, Zhijin, Beijing 101318 (CN)
(74) Representative: Inchingalo, Simona
(86) International application number: PCT/CN2020/122861
(87) International publication number: WO 2021/238038

(56) References cited:
- CN-A- 102 745 324
- CN-A- 102 745 324
- CN-A- 108 527 945
- CN-A- 109 681 762
- CN-A- 110 293 678
- CN-A- 111 457 237
- CN-U- 204 361 278
- RU-C1- 2 035 313
- US-A1- 2008 176 027
- US-A1- 2014 060 755

## Description

### Cross-Reference to Related Application

This invention claims priority to Chinese Patent Application No. 202010456879.6, filed to the China National Intellectual Property Administration on May 26, 2020 and entitled "Flexible Honeycomb Structure and Manufacturing Method for Flexible Honeycomb Structure ".

### Technical Field

The invention relates to a technical field of flexible honeycomb structures, and in particular to a flexible honeycomb structure and a manufacturing method for the flexible honeycomb structure.

### Background

A honeycomb structure is a structural material formed by covering a two-dimensional plane, which has a special integral honeycomb structure, and the structural material has light weight, high specific strength and excellent mechanical properties, so that it is widely applied to composite materials, particularly to fields of aerospace, high specific strength requirements, force bearing structures, impact resistance, energy absorption, noise elimination and the like.

However, in a relevant art, for parts with non-planar structure and small curvature radius, a plate-shaped honeycomb structural material manufactured by using a conventional honeycomb structure generates a saddle shape when being bent, meanwhile, the saddle shape is more obvious when a height and a breadth of the honeycomb structural material are larger. The saddle shape is difficult to eliminate, so that the material is difficult to form, a manufacturing process for eliminating the saddle shape is complex, a cost is high, a waste is large, and a quality of a product is difficult to ensure.

Therefore, a problem of the honeycomb structure and a composite material having the honeycomb structure generating a saddle shape during a bending process exists in the related art.

Examples of a Volume Element and Method of Manufacturing Cellular Structures according to the prior art are described in RU2035313C1; examples of a Kind of Flexible Covering according to the prior art are described in CN102745324A; examples of Half Closed Thermoplastic Honeycomb, Their Production Process and Equipment to Produce according to the prior art are described in US20080176027A1; and examples of 3D Printing Preparation Method of Continuous Carbon Fiber Reinforced Honeycomb Structure according to the prior art are described in CN110293678A. CN102745324A discloses a flexible honeycomb structure according to the preamble of claim 1.

### Summary

The invention provides a flexible honeycomb structure according to claim 1 and manufacturing methods according to claims 7 and 10 for the flexible honeycomb structure, for solving a problem of a honeycomb structure and a composite material having the honeycomb structure generating a saddle shape during a bending process in a related art.

The invention is as defined in claim 1.

In some embodiments, the top edges of two adjacent core lattice units in the first direction have opposite directions of inclination, and the top edges of two adjacent core lattice units in the second direction have the same direction of inclination.

In some embodiments, there is a second included angle a2 between a line connecting two ends of the bottom edge and the first direction, and the first included angle a1 is equal to the second included angle a2.

In some embodiments, the first included angle a1 is greater than or equal to 3°.

In some embodiments, a number of the edges of the core lattice unit is even, and diagonal angles of the core lattice unit are equal.

In some embodiments, the top edge and/or the bottom edge and/or the side edge are/is of a wavy structure.

According to another aspect of the invention, a manufacturing method according to claim 7 for a flexible honeycomb structure is provided, the flexible honeycomb structure is the flexible honeycomb structure provided above, and the flexible honeycomb structure is made of a single-sheet forming strip. The manufacturing method for the flexible honeycomb structure includes: dividing the single-sheet forming strip into a plurality of to-be-processed sections which are arranged in sequence, each of the plurality of to-be-processed sections includes a plurality of strip units, and each of the plurality of strip units includes a concave edge, a first connecting edge, a convex edge and a second connecting edge which are connected in sequence; setting a previous to-be-processed section as a reference section, flipping a current to-be-processed section towards the reference section, and sequentially flipping remaining to-be-processed sections according to an above method until the flexible honeycomb structure is formed; during flipping, the concave edge of the strip unit of the reference section attaches to the concave edge of a corresponding strip unit of the current to-be-processed section, the first connecting edge, the convex edge and the second connecting edge of the strip unit of the reference section and the first connecting edge, the convex edge and the second connecting edge of the corresponding strip unit of the current to-be-processed section, so that the strip unit of the reference section and the corresponding strip unit of the current to-be-processed section enclose the core lattice unit of the flexible honeycomb structure.

In some embodiments, an operation of setting a previous to-be-processed section as a reference section, and flipping a current to-be-processed section towards the reference section specifically includes: when the current to-be-processed section attaches to the reference section, contact attaching edges of the current to-be-processed section and the reference section have the same direction of inclination.

In some embodiments, a connection mode of an attaching joint of the current to-be-processed section and the reference section includes welding, bonding and mechanical connection.

According to another aspect of the invention, a manufacturing method according to claim 10 for a flexible honeycomb structure is provided, the flexible honeycomb structure is the flexible honeycomb structure provided above, and the manufacturing method for the flexible honeycomb structure includes 3D printing, CNC machining and casting.

By an adoption of technical solutions of the invention, the flexible honeycomb structure includes a plurality of core lattice units, each of the plurality of core lattice units is of the hexagonal structure, and the plurality of core lattice units combine with each other to form the flexible honeycomb structure. Specifically, each of the plurality of core lattice units is of an inclined structure, two adjacent core lattice units in the first direction have opposite directions of inclination, two adjacent core lattice units in the second direction have the same direction of inclination, and the first direction is perpendicular to the second direction. By adopting above structures, when the flexible honeycomb structure is bent, the core lattice units are prone to tilt and folded-deform. The core lattice units are prone to deformation due to stress stretching or compression, and the deformation does not only depend on elasticity of the material, so that the flexible honeycomb structure is prone to flexible deformation, and therefore, the problem of the honeycomb structure and a composite material having the honeycomb structure generating a saddle shape during a bending process is solved.

### Brief Description of the Drawings

The drawings, which form a part of the invention, serve to provide a further understanding of the invention, and illustrative embodiments of the invention and descriptions of the invention serve to explain the invention and are not to be construed as unduly limiting the invention. In the drawings:
Fig. 1 illustrates a schematic structure diagram of a flexible honeycomb structure provided by Embodiment I of the invention.
Fig. 2 illustrates a schematic structure diagram of a core lattice unit in Fig. 1.
Fig. 3 illustrates a schematic structure diagram of another structure of a flexible honeycomb structure provided by Embodiment I of the invention.
Fig. 4 illustrates a schematic structure diagram of a core lattice unit in Fig. 3.
Fig. 5 illustrates a schematic structure diagram of a single-sheet forming strip provided by Embodiment IV of the invention.
Fig. 6 illustrates a schematic structure diagram of core lattice units enclosed by the single-sheet forming strip provided by Embodiment IV of the invention.
Fig. 7 illustrates another schematic structure diagram of the single-sheet forming strip provided by Embodiment IV of the invention.
Fig. 8 illustrates a schematic structure diagram of flipping of the single-sheet forming strip provided by Embodiment IV of the invention.
Fig. 9 illustrates a schematic structure diagram after further flipping of the single-sheet forming strip in Fig. 8.
Fig. 10 illustrates a schematic structure diagram after further flipping of the single-sheet forming strip in Fig. 9.
Fig. 11 illustrates a schematic structure diagram completing overturning of the single-sheet forming strip in Fig. 10.
Fig. 12 illustrates a schematic structure diagram of continuous flipping of the single-sheet forming strip provided by Embodiment IV of the invention.
Fig. 13 illustrates a schematic structure diagram of a flexible honeycomb structure provided by Embodiment II of the invention.
Fig. 14 illustrates a schematic structure diagram of a core lattice unit in Fig. 13.
Fig. 15 illustrates another schematic structure diagram of the single-sheet forming strip provided by Embodiment IV of the invention.
Fig. 16 illustrates another schematic structure diagram of continuous flipping of the single-sheet forming strip provided by Embodiment IV of the invention.
Fig. 17a illustrates a schematic structure diagram during compression of the flexible honeycomb structure provided by Embodiment I of the invention.
Fig. 17b illustrates a schematic structure diagram during compression of the flexible honeycomb structure provided by Embodiment I of the invention.
Fig. 17c illustrates a schematic structure diagram during compression of the flexible honeycomb structure provided by Embodiment I of the invention.
Fig. 17d illustrates a schematic structure diagram during compression of the flexible honeycomb structure provided by Embodiment I of the invention.
Fig. 17e illustrates a schematic structure diagram during compression of the flexible honeycomb structure provided by Embodiment I of the invention.
Fig. 18a illustrates a schematic structure diagram during stretching of another structure of the flexible honeycomb structure provided by Embodiment I of the invention.
Fig. 18b illustrates a schematic structure diagram during stretching of another structure of the flexible honeycomb structure provided by Embodiment I of the invention.
Fig. 18c illustrates a schematic structure diagram during stretching of another structure of the flexible honeycomb structure provided by Embodiment I of the invention.
Fig. 18d illustrates a schematic structure diagram during stretching of another structure of the flexible honeycomb structure provided by Embodiment I of the invention.
Fig. 19 illustrates a schematic structure diagram of a core lattice unit of a flexible honeycomb structure provided by Embodiment III of the invention.

The above drawings include the following reference numbers:
10. Core lattice unit; 11. Top edge; 12. Bottom edge; 13. Side edge;
20. Single-sheet forming strip; 21. To-be-processed section; 211. Strip unit; 2111. Concave edge; 2112. First connecting edge; 2113. Convex edge; 2114. Second connecting edge;
a1. First included angle; a2. Second included angle; a3. Third included angle; a4. Fourth included angle;
p1. Vertex of a core lattice unit; p2. Vertex of a core lattice unit; p3, Vertex of a core lattice unit; p4. Vertex of a core lattice unit; p5. Vertex of a core lattice unit; p6. Vertex of a core lattice unit.

### Detailed Description of the Embodiments

The technical solutions in the embodiments of the invention will be clearly and completely described below in combination with the drawings in the embodiments of the invention. It is apparent that the described embodiments are not all embodiments but part of embodiments of the invention. The following description for at least one exemplary embodiment is merely illustrative in nature and is in no way intended to limit the scope of the invention defined by the appended claims.

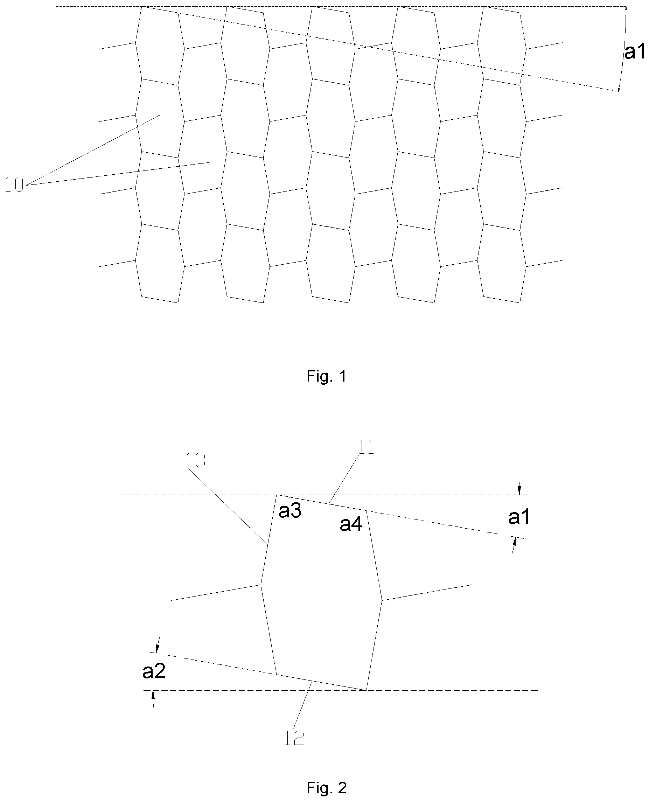

As shown in Figs. 1-4, Embodiment I of the invention provides a flexible honeycomb structure, which includes a plurality of core lattice units 10, each of the plurality of core lattice units 10 is of a hexagonal structure, and the plurality of core lattice units 10 combine with each other to form the flexible honeycomb structure. Each of the core lattice unit 10 is of an inclined structure, two adjacent core lattice units 10 in a first direction have opposite directions of inclination, two adjacent core lattice units 10 in a second direction have a same direction of inclination, and the first direction is perpendicular to the second direction. In the embodiment, the first direction is a horizontal direction, and the second direction is a vertical direction.

By an adoption of the flexible honeycomb structure provided by the embodiment, each of the plurality of core lattice units 10 is of an inclined structure, directions of inclination of the core lattice units 10 are correspondingly configured in the first direction and the second direction, when the flexible honeycomb structure is bent, the core lattice units 10 are prone to tilt and folded-deform, the core lattice units 10 are prone to deformation due to stress stretching or compression, and the deformation does not only depend on elasticity of the material, the flexible honeycomb has a wide stretching and contracting flexibility, so that the flexible honeycomb structure is prone to flexible deformation, therefore, a problem of the honeycomb structure and a composite material having the honeycomb structure generating a saddle shape during a bending process is solved, and a processing cost is reduced.

In the embodiment, the honeycomb structure and composite material having the honeycomb structure include a honeycomb structural material, or (and) a plate-shaped honeycomb structural material made of the honeycomb structural material, or (and) a honeycomb composite material (including a porous plate composite structure) made of the honeycomb structural material. By the adoption of the flexible honeycomb structure provided by the embodiment, a problem of a typical multi-curved-surface honeycomb sandwich plate structure composite material in the related art generating a saddle shape during a bending process would not occur.

As shown in Fig. 2, each of the plurality of core lattice units 10 includes a top edge 11, a bottom edge 12 and two side edges 13 connecting the top edge 11 and the bottom edge 12. The side edges 13 of two adjacent core lattice units 10 are connected with each other in the first direction to connect the core lattice units 10 on each row of the flexible honeycomb structure. The bottom edge 12 of the core lattice unit 10 located above is connected with the top edge 11 of the core lattice unit 10 located below in the second direction to connect the core lattice cells 10 on each row of the flexible honeycomb structure, and the top edge 11 and the bottom edge 12 are not parallel to the first direction.

The core lattice unit 10 is of a hexagonal structure, each edge of the core lattice unit has an equal length, and each side edge 13 includes two interconnected segments.

Specifically, the top edges 11 of two adjacent core lattice units 10 in the first direction have opposite directions of inclination, and the top edges 11 of two adjacent core lattice units 10 in the second direction have the same direction of inclination, therefore, when the flexible honeycomb structure is bent, the core lattice unit 10 is prone to tilt and folded-deform.

As shown in Fig. 2, there is a first included angle a1 between a line connecting two ends of the top edge 11 and the first direction. In the embodiment, the top edge 11 is of a linear structure, and there is a first included angle a1 between the top edge 11 and the first direction. In other embodiments, the top edge may be configured as an inclined zigzag or wavy structure, as long as it is ensured that the top edge is not parallel to the first direction.

As shown in Fig. 2, there is a second included angle a2 between a line connecting two ends of the top edge 12 and the first direction. In the embodiment, the bottom edge 12 is of a linear structure, and there is a second included angle a2 between the bottom edge 12 and the first direction. In other embodiments, the bottom edge may be configured as an inclined zigzag or wavy structure, as long as it is ensured that the bottom edge is not parallel to the first direction.

In the embodiment, the first included angle a1 is equal to the second included angle a2, a shape of the core lattice unit is relatively regular, so that while the core lattice unit is prone to tilt and folded-deform, the flexible honeycomb structure is convenient to process.

The first included angle is greater than or equal to 3°, when the first included angle is greater than or equal to 3°, a stable structure of a hexagon is destroyed, so that the core lattice unit is prone to tilt and folded-deform, and certainly the larger the first included angle is, the more prone to tilt and stretchingly-compressingly deform. If the first included angle is smaller than 3°, the core lattice unit is not prone to tilt and folded-deform. Specifically, the first included angle may be set between 3° and 60°. In the embodiment, the first included angle is 10°.

As shown in Fig. 2, there is a third included angle a3 between one side edge 13 of the core lattice unit 10 and the top edge 11, there is a fourth included angle a4 between the other side edge 13 of the core lattice unit 10 and the top edge 11, and the first included angle a1 is half of an absolute value of a difference between the third included angle a3 and the fourth included angle a4.

In the embodiment, the number of the edges of the core lattice unit 10 is even, and diagonal angles of the core lattice unit 10 are equal, so that the core lattice unit is not prone to tilt and folded-deform. In the embodiment, opposite edges of the core lattice unit are equidistant.

In the embodiment, the flexible honeycomb structure further includes a face plate covering an outside of the core lattice units, and the face plate may be made of a composite material or (and) a porous plate. The core lattice units are supported by the face plate, so that a strength and a mechanical property of the flexible honeycomb structure are guaranteed, and a composite structure a honeycomb core and the porous face plate embodies noise elimination and excellent acoustic performance.

In the related art, a conventional core lattice unit is of a regular hexagonal structure, when the conventional core lattice unit is horizontally placed, a top edge and a bottom edge of the core lattice unit are parallel to the horizontal direction, and due to a fact that the conventional regular hexagonal core lattice units have independent spaces and restrict each other, it is not easy to deform and easy to generate a saddle shape by stretching bending and contracting bending depending on elasticity of the conventional core lattice unit. By the adoption of the flexible honeycomb structure provided by the embodiment, the top edge and the bottom edge of the core lattice unit have an inclined angle, so that the stable structure of a hexagon is destroyed, when an acting force is applied to the core lattice unit in the horizontal direction, the core lattice unit tilts and stretchingly-compressingly deforms along inclined opposite angles of the hexagon, so that the whole core lattice unit is flexibly deformed, in a horizontal direction and a vertical direction (a circumferential direction and an axial direction of curvature) of the flexible honeycomb structure, the flexible honeycomb structure has wide stretching and contracting flexibility according to a stress condition of stretching and compression, so that the problem that the honeycomb structure generating a saddle shape during a bending process is avoided.

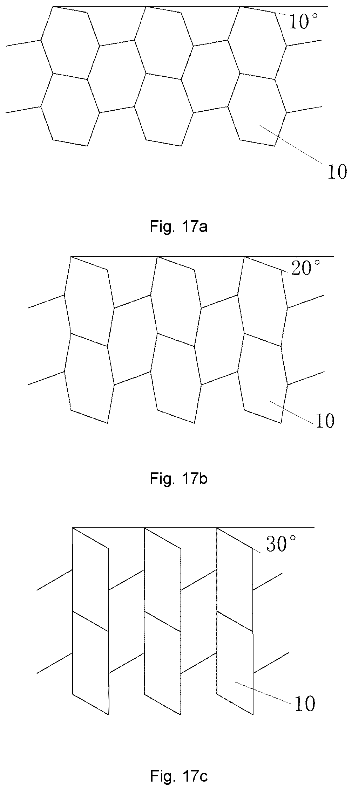

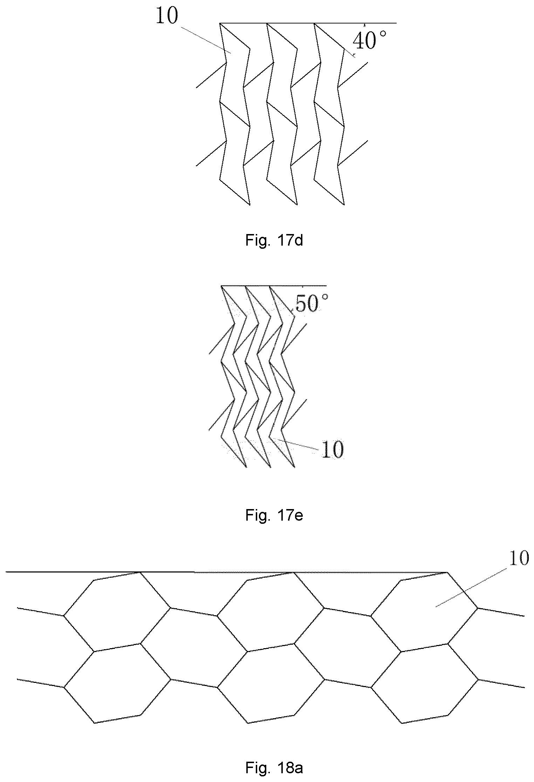

Figs. 17a to 17e illustrate schematic structure diagrams during gradual compression of the flexible honeycomb structure, and the first included angle is changed from 10° to 20 °, 20° to 30°, 30° to 40°, and 40° to 50°. Each of the core lattice units is of an inclined structure, the whole flexible honeycomb structure is in an inclined state, when the core lattice units of the flexible honeycomb structure is subjected to compression force in the horizontal direction, the opposite angles of the core lattice unit tend to folding deformation. The first included angle varies as with acting force changes, the larger the acting force is, the larger the folding deformation of the core lattice unit is, and the larger a change of the first included angle is. When the flexible honeycomb structure is deformed to an extreme position, the flexible honeycomb structure is in a folded state, and a maximum flexible change is achieved.

In a similar way, when the flexible honeycomb structure is subjected to stretching force in the horizontal direction, the opposite angles of the core lattice unit tend to unfold the folding deformation, the first included angle varies as with acting force changes, the larger the acting force is, the larger the unfolding of the folding deformation of the core lattice unit is, and the larger the change of the first included angle is.

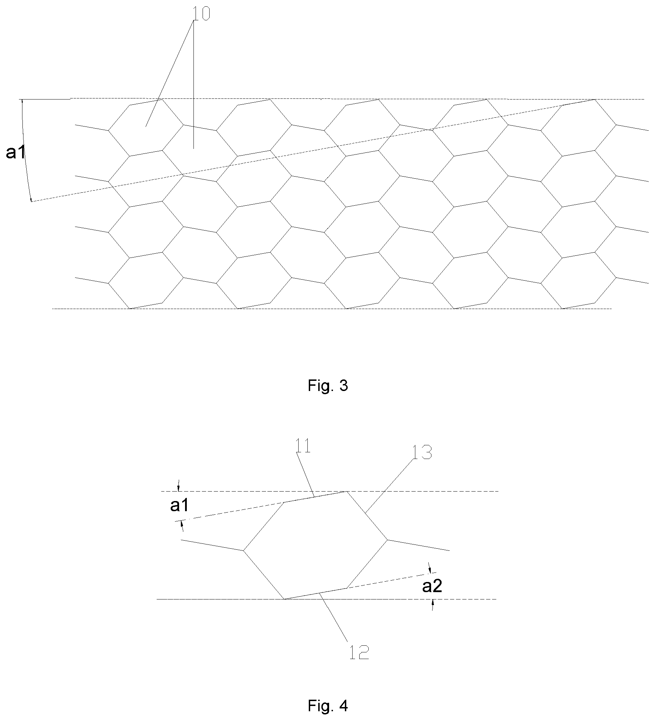

As shown in Fig. 3 and Fig. 4, the embodiment provides a flexible honeycomb structure of another structure.

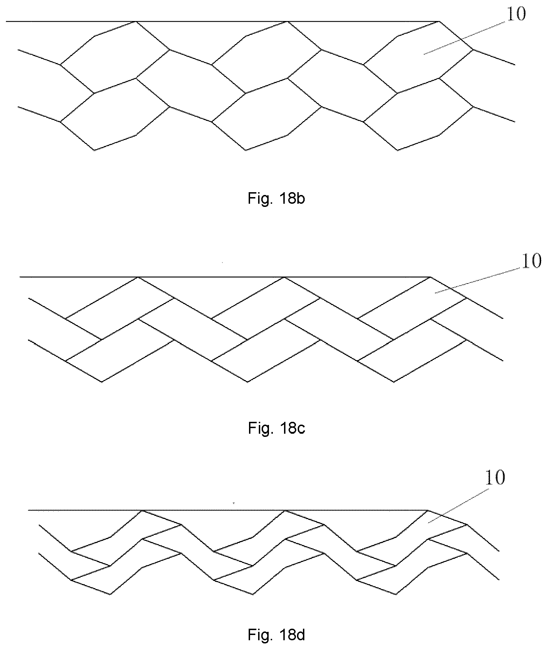

Figs. 18A-18d illustrate schematic structure diagrams during gradual stretching of the flexible honeycomb structure of another structure, which is symmetric to the previous structure, so that the stretching and compressing change processes are also the same.

When the flexible honeycomb structure is bent, stretching and compressing act at a same time, and the whole flexible honeycomb structure flexibly stretches and compresses along with curvature changes, so that a saddle shape is avoided.

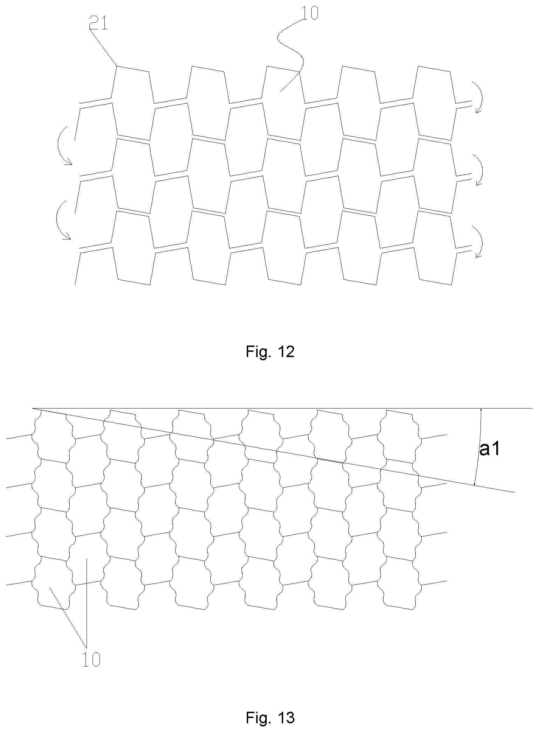

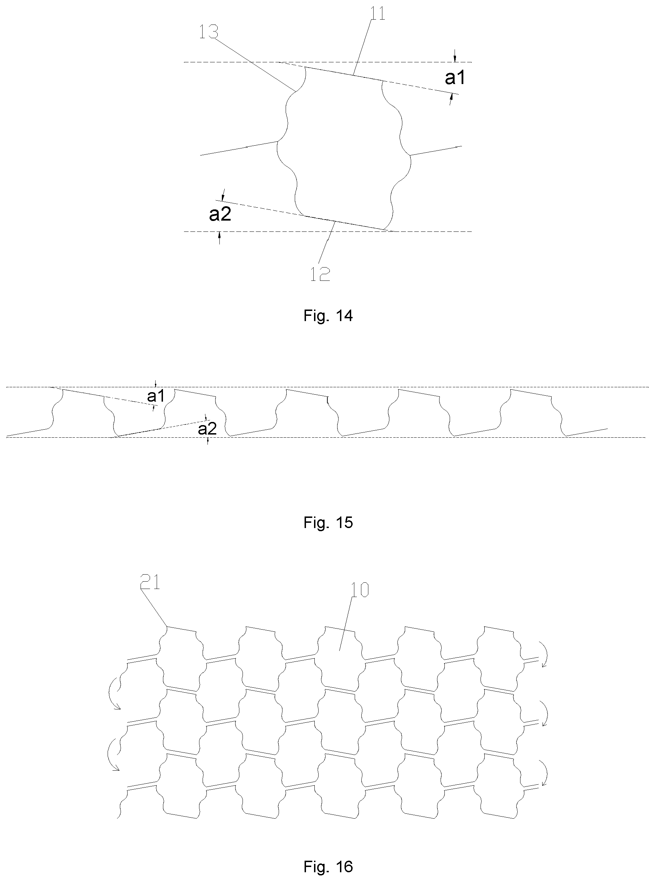

As shown in Fig. 13 and Fig. 14, Embodiment II of the invention provides a flexible honeycomb structure, which differs from Embodiment I in that in the Embodiment 2, side edges 13 of a core lattice unit 10 are of a wavy structure, a flexible deformation characteristic of the flexible honeycomb structure is more prominent, and a stretching and compressing flexibility and a specific strength of the flexible honeycomb structure are better than those of Embodiment I. In the embodiment, the side edges 13 are two interconnected segments, each of which is provided with three continuous wavy structures. The wavy structures may be other concave-convex shapes.

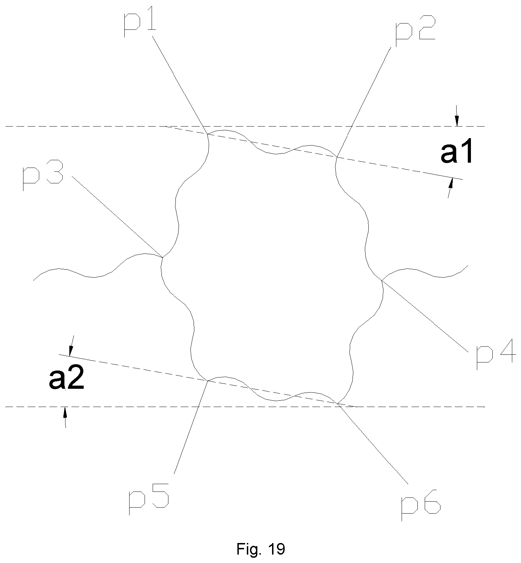

As shown in Fig. 19, Embodiment III of the invention provides a flexible honeycomb structure, which differs from Embodiment I in that in Embodiment III, a top edge, a bottom edge and side edges of a core lattice unit 10 are of a wavy structure, and a flexible deformation characteristic of the flexible honeycomb structure is more prominent. Wherein p1, p2, p3, p4, p5 and p6 are six vertexes of the core lattice unit respectively, a connecting line of p1 and p2 is a line connecting two ends of the top edge 11 of the core lattice unit, and there is a first included angle a1 between the line connecting two ends of the top edge 11 of the core lattice unit and a first direction, a connecting line of p5 and p6 is a line connecting two ends of the bottom edge 12 of the core lattice unit, and there is a second included angle a2 between the line connecting two ends of the bottom edge 12 and the first direction, and the first included angle a1 is equal to the second included angle a2.

In other embodiments, shapes of a top edge, a bottom edge, and side edges of a core lattice unit 10 may be adaptively adjusted. For example, only the top edge of the core lattice unit 10 is configured as a wavy structure, or only the bottom edge of the core lattice unit 10 is configured as a wavy structure.

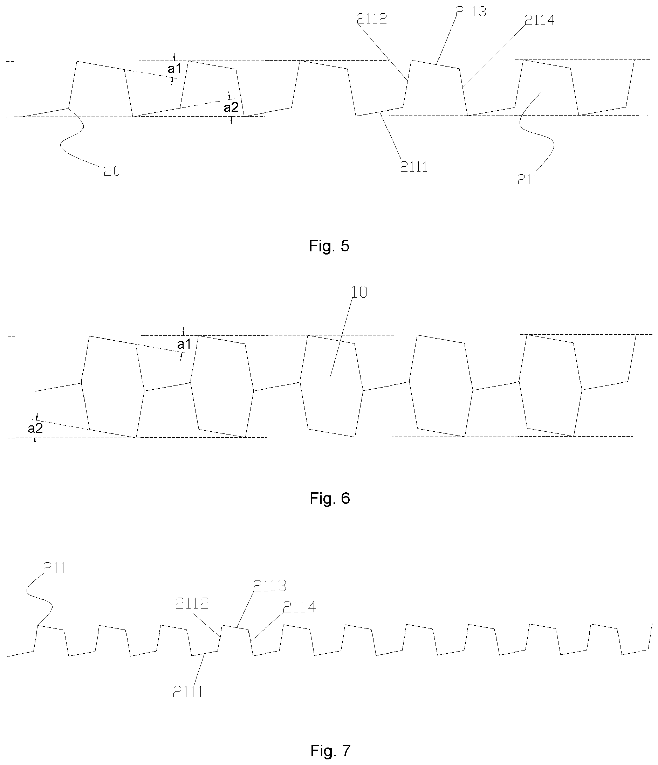

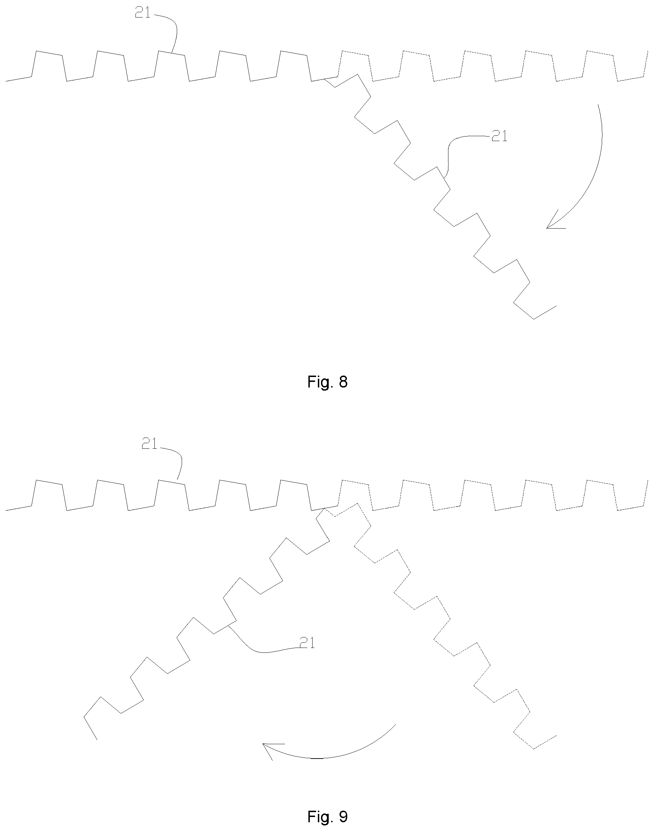

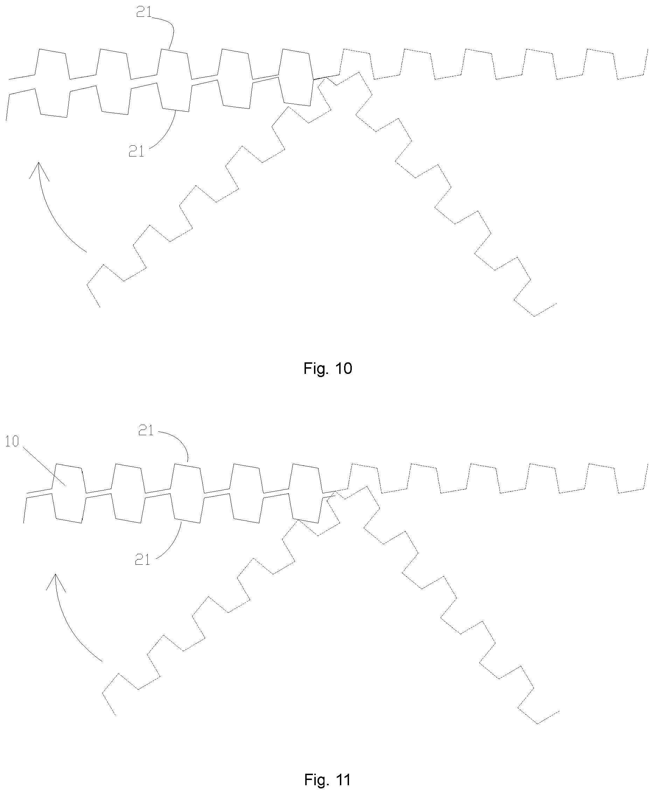

As shown in Figs. 5 -12 and Fig. 15 and Fig. 16, Embodiment IV of the invention provides a manufacturing method for a flexible honeycomb structure, the flexible honeycomb structure is the flexible honeycomb structure provided above, the flexible honeycomb structure is made of a single-sheet forming strip 20, and the manufacturing method for the flexible honeycomb structure includes following steps.

S100, dividing the single-sheet forming strip 20 into a plurality of to-be-processed sections 21 which are arranged in sequence, each of the plurality of to-be-processed sections 21 includes a plurality of strip units 211, and each of the plurality of strip units 211 includes a concave edge 211, a first connecting edge 2112, a convex edge 2113 and a second connecting edge 2114 which are connected in sequence.

S200, setting a previous to-be-processed section 21 as a reference section, flipping a current to-be-processed section 21 towards the reference section, and sequentially flipping remaining to-be-processed sections 21 according to an above method until the flexible honeycomb structure is formed.

During flipping, the concave edge 2111 of the strip unit 211 of the reference section attaches to the concave edge 2111 of a corresponding strip unit 211 of the current to-be-processed section 21, the first connecting edge 2112, the convex edge 2113 and the second connecting edge 2114 of the strip unit 211 of the reference section and the first connecting edge 2112, the convex edge 2113 and the second connecting edge 2114 of the corresponding strip unit 211 of the current to-the-processed section 21 are closed, so that the strip unit 211 of the reference section and the corresponding strip unit 211 of the current to-be-processed section 21 enclose a core lattice unit 10 of the flexible honeycomb structure.

An operation of setting a previous to-be-processed section 21 as a reference section, flipping a current to-be-processed section 21 towards the reference section specifically includes: when the current to-be-processed section 21 attaches to the reference section, contact attaching edges of the current to-be-processed section 21 and the reference section have a same direction of inclination. In the embodiment, during flipping, the concave edge 2111 of the strip unit 211 of the reference section attaches to the concave edge 2111 of the corresponding strip unit 211 of the current to-be-processed section 21, and the concave edge 2111 of the strip unit 211 of the reference section and the concave edge 2111 of the corresponding strip unit 211 of the current to-be-processed section 21 have the same direction of inclination.

Specifically, an operation of dividing the single-sheet forming strip 20 into a plurality of to-be-processed sections 21 which are arranged in sequence includes the following two modes.
(1) Dividing the single-sheet forming strip 20 into a plurality of to-be-processed sections 21 which are sequentially connected, during processing, setting a previous to-be-processed section 21 as a reference section, flipping a current to-be-processed section 21 towards the reference section, and sequentially flipping remaining to-be-processed sections 21 according to an above method until the flexible honeycomb structure is formed.
(2) Dividing the single-sheet forming strip into a plurality of to-be-processed sections which are not connected, during processing, setting a previous to-be-processed section as a reference section, flipping a current to-be-processed section towards the reference section, and sequentially flipping remaining to-be-processed sections according to an above method until the flexible honeycomb structure is formed.

A continuous forming strip is reversely stacked and spliced (overturned), and is then stacking and splicing back and forth sequentially to form the flexible honeycomb structure. The forming strip to be reversely stacked and spliced can be a continuous forming strip or a plurality of discontinuous forming strips (a plurality of to-be-processed sections 21 which are not connected)

A connection mode of an attaching joint of the current to-be-processed section 21 and the reference section includes welding, bonding and mechanical connection, and a splicing process of the to-be-processed sections 21 circulates back and forth, which is easy to achieve automation. Specifically, bonding includes gluing.

In the embodiment, the flexible honeycomb structure is sequentially and reversely splicing from top to bottom, and in other embodiments, the flexible honeycomb structure may be spliced by a continuous forming strip from bottom to top.

According to the manufacturing method for the flexible honeycomb structure provided by the embodiment, the core lattice units are formed by splicing the single-sheet forming strip reversely, so that deformation directions of the core lattice units are consistent, no confrontation force restricting each other exists, the core lattice units are prone to tilt and stretching-compressing deform along opposite angles, the whole flexible honeycomb structure has integral stretching-compressing flexible deformation, meanwhile, a manufacturing process is simple, and it is easy to implement, a cost is low, and a flexible range is large.

Embodiment V of the invention provides a manufacturing method for a flexible honeycomb structure, the flexible honeycomb structure is the flexible honeycomb structure provided above, and the manufacturing method for the flexible honeycomb structure includes 3D printing, CNC machining and casting. For example, a whole piece of to-be-processed material is processed by numerical control milling, or pre-manufacturing a mold and then manufacturing by casting.

The embodiment has following beneficial effects.
(1) A structure of the core lattice unit is changed, so that the core lattice unit is prone to fold after opposite sides of the core lattice unit are stressed, meanwhile, interiors of the core lattice unit do not against each other during stretched-compressed deformation, stretching-compressing deformation directions of the flexible honeycomb structure are consistent, the flexible honeycomb structure has a characteristic of integral stretching-compressing flexible deformation, and deformation of the flexible honeycomb structure does not depend only on an elasticity of material.
(2) The flexible honeycomb structure is formed by sequentially and reversely splicing the forming strip, a forming process is simple, a back-and-forth circulation process is continuous, and automation is easy to realize especially for a continuous forming strip.
(3) The flexible honeycomb is simple in structure and easy to manufacture and is closest to a conventional honeycomb in form structure, when the flexible honeycomb structure is bent, the flexible honeycomb structure stretches and compresses along with an angle change of the first included angle, and when the first included angle is 0, the flexible honeycomb structure is a conventional hexagonal honeycomb.
(4) Each edge of each core lattice units of the flexible honeycomb structure can be formed by combining various shapes such as a wavy shape and/or other concave-convex shapes.

The foregoing is merely preferred embodiment of the invention and is not intended to limit the scope of the present invention defined by the appended claims.

## Claims

1. A flexible honeycomb structure, comprising a plurality of core lattice units (10), each of the plurality of core lattice units (10) is of a polygonal structure, and the plurality of core lattice units (10) combine with each other to form the flexible honeycomb structure, each of the plurality of core lattice units (10) is of an inclined structure, two adjacent core lattice units (10) in a first direction have opposite directions of inclination, two adjacent core lattice units (10) in a second direction have a same direction of inclination, and the first direction is perpendicular to the second direction; the core lattice unit (10) comprises a top edge (11), a bottom edge (12) and two side edges (13) connecting the top edge (11) and the bottom edge (12), the side edges (13) of two adjacent core lattice units (10) are connected with each other in the first direction, the bottom edge (12) of the core lattice unit (10) located above is connected with the top edge (11) of the core lattice unit (10) located below in the second direction, and the top edge (11) and the bottom edge (12) are not parallel to the first direction; there is a first included angle a1 between a line connecting two ends of the top edge (11) and the first direction;
there is a third included angle a3 between one side edge (13) of the core lattice unit (10) and the top edge (11), and there is a fourth included angle a4 between the other side edge (13) of the core lattice unit (10) and the top edge (11), and the first included angle a1 is half of an absolute value of a difference between the third included angle a3 and the fourth included angle a4;
**characterized in that**, each of the plurality of core lattice units (10) is of a hexagonal structure, each edge of the core lattice unit (10) has an equal length, and each side edge (13) comprises two interconnected segments.

2. The flexible honeycomb structure as claimed in claim 1, wherein the top edges (11) of two adjacent core lattice units (10) in the first direction have opposite directions of inclination, and the top edges (11) of two adjacent core lattice units (10) in the second direction having the same direction of inclination.

3. The flexible honeycomb structure as claimed in claim 1, wherein there is a second included angle a2 between a line connecting two ends of the bottom edge (12) and the first direction, and the first included angle a1 is equal to the second included angle a2.

4. The flexible honeycomb structure as claimed in claim 1, wherein the first included angle a1 is greater than or equal to 3°.

5. The flexible honeycomb structure as claimed in claim 1, wherein a number of edges of the core lattice unit (10) is even, and diagonal angles of the core lattice unit (10) are equal.

6. The flexible honeycomb structure as claimed in claim 1, wherein the top edge (11) and/or the bottom edge (12) and/or the side edge (13) are/is of a wavy structure.

7. A manufacturing method for a flexible honeycomb structure, **characterized in that** the flexible honeycomb structure is the flexible honeycomb structure as claimed in any of claims 1-6, the flexible honeycomb structure is made of a single-sheet forming strip (20), and the manufacturing method for the flexible honeycomb structure comprises:
dividing the single-sheet forming strip (20) into a plurality of to-be-processed sections (21) which are arranged in sequence, each of the plurality of to-be-processed sections (21) comprises a plurality of strip units (211), and each of the plurality of strip units (211) comprises a concave edge (2111), a first connecting edge (2112), a convex edge (2113) and a second connecting edge (2114) which are connected in sequence;
setting a previous to-be-processed section (21) as a reference section, flipping a current to-be-processed section (21) towards the reference section, and sequentially flipping remaining to-be-processed section (21) according to an above method until the flexible honeycomb structure is formed;
wherein during flipping, the concave edge (2111) of the strip unit (211) of the reference section attaches to the concave edge (2111) of a corresponding strip unit (211) of the current to-be-processed section (21), the first connecting edge (2112), the convex edge (2113) and the second connecting edge (2114) of the strip unit (211) of the reference section and the first connecting edge (2112), the convex edge (2113) and the second connecting edge (2114) of the corresponding strip unit (211) of the current to-be-processed section (21) are closed, so that the strip unit (211) of the reference section and the corresponding strip unit (211) of the current to-be-processed section (21) enclose the core lattice unit (10) of the flexible honeycomb structure.

8. The manufacturing method for the flexible honeycomb structure as claimed in claim 7, an operation of setting a previous to-be-processed section (21) as a reference section, and flipping a current to-be-processed section (21) towards the reference section specifically comprises:
when the current to-be-processed section (21) attaches to the reference section, contact attaching edges of the current to-be-processed section (21) and the reference section have the same direction of inclination.

9. The manufacturing method for the flexible honeycomb structure as claimed in claim 7, wherein a connection mode of an attaching joint of the current to-be-processed section (21) and the reference section includes welding, bonding and mechanical connection.

10. A manufacturing method for a flexible honeycomb structure, **characterized in that**
the flexible honeycomb structure is the flexible honeycomb structure as claimed in any of claims 1-6, and the manufacturing method for the flexible honeycomb structure comprises 3D printing, CNC machining and casting.

## Patentansprüche

1. Flexible Wabenstruktur, bestehend aus einer Vielzahl von Kerngitterelementen (10), wobei jedes der Vielzahl der Kerngitterelemente (10) eine polygonale Struktur aufweist und die Vielzahl der Kerngitterelemente (10) sich miteinander verbindet, um die flexible Wabenstruktur zu bilden, wobei jedes der zahlreichen Kerngitterelemente (10) eine geneigte Struktur aufweist, wobei zwei benachbarte Kerngitterelemente (10) in einer ersten Richtung entgegengesetzte Neigungsrichtungen aufweisen, zwei benachbarte Kerngitterelemente (10) in einer zweiten Richtung dieselbe Neigungsrichtung aufweisen und die erste Richtung senkrecht zur zweiten Richtung verläuft; wobei die Kerngittereinheit (10) eine Oberkante (11), eine Unterkante (12) und zwei Seitenkanten (13) umfasst, die die Oberkante (11) und die Unterkante (12) verbinden, die Seitenkanten (13) zweier benachbarter Kerngittereinheiten (10) in der ersten Richtung miteinander verbunden sind, die Unterkante (12) der darüber liegenden Kerngittereinheit (10) ist in der zweiten Richtung mit der Oberkante (11) der darunter liegenden Kerngittereinheit (10) verbunden, und die Oberkante (11) sowie die Unterkante (12) verlaufen nicht parallel zur ersten Richtung; zwischen einer Linie, die zwei Enden der Oberkante (11) verbindet, und der ersten Richtung besteht ein erster eingeschlossener Winkel;
zwischen einer Seitenkante (13) der Kerngittereinheit (10) und der Oberkante (11) besteht ein dritter eingeschlossener Winkel a3, und zwischen der anderen Seitenkante (13) der Kerngittereinheit (10) und der Oberkante (11) besteht ein vierter eingeschlossener Winkel a4, und der erste eingeschlossene Winkel a1 beträgt die Hälfte des Absolutwerts der Differenz zwischen dem dritten eingeschlossenen Winkel a3 und dem vierten eingeschlossenen Winkel a4;
**dadurch gekennzeichnet, dass** jede der mehreren Kerngittereinheiten (10) eine hexagonale Struktur aufweist, jede Kante der Kerngittereinheit (10) eine gleiche Länge hat und jede Seitenkante (13) aus zwei miteinander verbundenen Segmenten besteht.

2. Flexible Wabenstruktur nach Anspruch 1, wobei die Oberkanten (11) zweier benachbarter Kerngitterelemente (10) in der ersten Richtung entgegengesetzte Neigungsrichtungen aufweisen und die Oberkanten (11) zweier benachbarter Kerngitterelemente (10) in der zweiten Richtung dieselbe Neigungsrichtung aufweisen.

3. Flexible Wabenstruktur nach Anspruch 1, wobei zwischen einer Verbindungslinie zwischen zwei Enden der Unterkante (12) und der ersten Richtung ein zweiter Einschlusswinkel a2 besteht und der erste Einschlusswinkel a1 gleich dem zweiten Einschlusswinkel a2 ist.

4. Flexible Wabenstruktur nach Anspruch 1, wobei der erste eingeschlossene Winkel a1 größer oder gleich 3° ist.

5. Flexible Wabenstruktur nach Anspruch 1, wobei die Anzahl der Kanten der Kerngittereinheit (10) gerade ist und die Diagonalwinkel der Kerngittereinheit (10) gleich sind.

6. Flexible Wabenstruktur nach Anspruch 1, wobei die Oberkante (11) und/oder die Unterkante (12) und/oder die Seitenkante (13) eine wellenförmige Struktur aufweist.

7. Verfahren zur Herstellung einer flexiblen Wabenstruktur, **dadurch gekennzeichnet, dass** es sich bei der flexiblen Wabenstruktur um die in einem der Ansprüche 1 bis 6 genannte flexible Wabenstruktur handelt, dass die flexible Wabenstruktur aus einem einlagigen Formstreifen (20) hergestellt ist und dass das Verfahren zur Herstellung der flexiblen Wabenstruktur Folgendes umfasst:
Teilen des einlagigen Formstreifens (20) in mehrere aufeinanderfolgend angeordnete, zu bearbeitende Abschnitte (21) unterteilt wird, wobei jeder der Vielzahl der zu bearbeitenden Abschnitte (21) mehrere Streifeneinheiten (211) umfasst, und jede der mehreren Streifeneinheiten (211) eine konkave Kante (2111), eine erste Verbindungskante (2112), eine konvexe Kante (2113) und eine zweite Verbindungskante (2114), die nacheinander miteinander verbunden werden, umfasst;
Festlegen eines vorherigen zu bearbeitenden Abschnitts (21) als Referenzabschnitt, Umklappen eines aktuell zu bearbeitenden Abschnitts (21) in Richtung des Referenzabschnitts und sequenzielles Umklappen der verbleibenden zu bearbeitenden Abschnitte (21) gemäß dem oben beschriebenen Verfahren, bis die flexible Wabenstruktur gebildet ist;
wobei sich beim Umklappen die konkave Kante (2111) der Streifeneinheit (211) des Referenzabschnitts an die konkave Kante (2111) einer entsprechenden Streifeneinheit (211) des aktuell zu bearbeitenden Abschnitts (21) anlegt, die erste Verbindungskante (2112), die konvexe Kante (2113) und die zweite Verbindungskante (2114) der des Referenzabschnitts sowie die erste Verbindungskante (2112), die konvexe Kante (2113) und die zweite Verbindungskante (2114) der entsprechenden Streifeneinheit (211) des aktuell zu bearbeitenden Abschnitts (21) geschlossen sind, so dass die Streifeneinheit (211) des Referenzabschnitts und die entsprechende Streifeneinheit (211) des aktuell zu bearbeitenden Abschnitts (21) die Kerngittereinheit (10) der flexiblen Wabenstruktur umschließen.

8. Herstellungsverfahren für die flexible Wabenstruktur gemäß Anspruch 7, bei dem ein zuvor zu bearbeitender Abschnitt (21) als Referenzabschnitt festgelegt und ein aktuell zu bearbeitender Abschnitt (21) in Richtung des Referenzabschnitts umgeklappt wird, umfassend insbesondere Folgendes:
Wenn der aktuell zu bearbeitende Abschnitt (21) an den Referenzabschnitt angelegt wird, weisen die Kontaktkanten des aktuell zu bearbeitenden Abschnitts (21) und des Referenzabschnitts die gleiche Neigungsrichtung auf.

9. Verfahren zur Herstellung der flexiblen Wabenstruktur nach Anspruch 7, wobei eine Verbindungsart einer Befestigungsstelle zwischen dem aktuell zu bearbeitenden Abschnitt (21) und dem Referenzabschnitt Schweißen, Kleben und mechanisches Verbinden umfasst.

10. Verfahren zur Herstellung einer flexiblen Wabenstruktur, **dadurch gekennzeichnet, dass** es sich bei der flexiblen Wabenstruktur um die in einem der Ansprüche 1 bis 6 genannte flexible Wabenstruktur handelt und das Verfahren zur Herstellung der flexiblen Wabenstruktur 3D-Druck, CNC-Bearbeitung und Gießen umfasst.

## Revendications

1. Structure alvéolaire flexible, comprenant une pluralité d'unités de treillis de base (10), chacune desdites unités de treillis de base (10) présentant une structure polygonale, et ladite pluralité d'unités de treillis de base (10) s'assemblant les unes aux autres pour former ladite structure alvéolaire flexible, chacune desdites unités de treillis de base (10) présentant une structure inclinée, deux unités de treillis de base adjacentes (10) dans une première direction ont des sens d'inclinaison opposés, deux unités de treillis de base adjacentes (10) dans une deuxième direction ont un même sens d'inclinaison, et la première direction est perpendiculaire à la deuxième direction ; l'unité de treillis de base (10) comprend un bord supérieur (11), un bord inférieur (12) et deux bords latéraux (13) reliant le bord supérieur (11) et le bord inférieur (12), les bords latéraux (13) de deux unités de treillis de base adjacentes (10) sont reliés entre eux dans la première direction, le bord inférieur (12) de l'unité de treillis de base (10) située au-dessus est relié au bord supérieur (11) de l'unité de treillis de base (10) située en dessous dans la deuxième direction, et le bord supérieur (11) et le bord inférieur (12) ne sont pas parallèles à la première direction ; il existe un premier angle inclus a1 entre une ligne reliant les deux extrémités du bord supérieur (11) et la première direction ;
il existe un troisième angle inclus a3 entre l'un des bords latéraux (13) de l'unité de treillis de base (10) et le bord supérieur (11), et il existe un quatrième angle inclus a4 entre l'autre bord latéral (13) de l'unité de treillis de base (10) et le bord supérieur (11), et le premier angle inclus a1 est égal à la moitié de la valeur absolue de la différence entre le troisième angle inclus a3 et le quatrième angle inclus a4 ;
**caractérisé en ce que** chacune des multiples unités de treillis de base (10) présente une structure hexagonale, chaque arête de l'unité de treillis de base (10) a une longueur égale, et chaque arête latérale (13) comprend deux segments reliés entre eux.

2. Structure alvéolaire flexible selon la revendication 1, dans laquelle les bords supérieurs (11) de deux unités de treillis de base adjacentes (10) dans la première direction présentent des sens d'inclinaison opposés, et les bords supérieurs (11) de deux unités de treillis de base adjacentes (10) dans la deuxième direction présentent le même sens d'inclinaison.

3. Structure alvéolaire flexible selon la revendication 1, dans laquelle il existe un deuxième angle a2 entre une ligne reliant les deux extrémités du bord inférieur (12) et la première direction, et le premier angle a1 est égal au deuxième angle a2.

4. Structure alvéolaire flexible selon la revendication 1, dans laquelle le premier angle a1 est supérieur ou égal à 3°.

5. Structure alvéolaire flexible selon la revendication 1, dans laquelle le nombre d'arêtes de l'unité de treillis de base (10) est pair et les angles diagonaux de l'unité de treillis de base (10) sont égaux.

6. Structure alvéolaire flexible selon la revendication 1, dans laquelle le bord supérieur (11) et/ou le bord inférieur (12) et/ou le bord latéral (13) présentent une structure ondulée.

7. Procédé de fabrication d'une structure alvéolaire flexible, **caractérisé en ce que** ladite structure alvéolaire flexible est celle visée dans l'une quelconque des revendications 1 à 6, **en ce qu'**elle est constituée d'une bande de formage en une seule feuille (20), et **en ce que** le procédé de fabrication de ladite structure alvéolaire flexible comprend :
en divisant la bande de formage en une seule feuille (20) en une pluralité de sections à traiter (21) disposées en séquence, chacune desdites sections à traiter (21) comprenant une pluralité d'unités de bande (211), et chacune des unités de bande (211) comprend un bord concave (2111), un premier bord de raccordement (2112), un bord convexe (2113) et un deuxième bord de raccordement (2114) qui sont reliés les uns aux autres en séquence ;
en définissant une section (21) à traiter précédemment comme section de référence, en rabattant la section (21) à traiter actuelle vers la section de référence, puis en rabattant séquentiellement les sections (21) à traiter restantes selon la méthode décrite ci-dessus jusqu'à ce que la structure alvéolaire flexible soit formée ;
dans lequel, lors du retournement, le bord concave (2111) de l'unité de bande (211) de la section de référence se fixe au bord concave (2111) d'une unité de bande correspondante (211) de la section en cours de traitement (21), le premier bord de raccordement (2112), le bord convexe (2113) et le deuxième bord de connexion (2114) de l'unité de bande (211) de la section de référence et le premier bord de connexion (2112), le bord convexe (2113) et le deuxième bord de connexion (2114) de l'unité de bande correspondante (211) de la section (21) en cours de traitement se ferment, de sorte que l'unité de bande (211) de la section de référence et l'unité de bande correspondante (211) de la section (21) en cours de traitement entourent l'unité de treillis de base (10) de la structure alvéolaire flexible.

8. Le procédé de fabrication de la structure alvéolaire flexible selon la revendication 7, comprenant une opération consistant à définir une section précédente à traiter (21) comme section de référence et faisant pivoter une section actuelle à traiter (21) vers la section de référence, comprend plus précisément :
lorsque la section à traiter (21) vient s'assembler avec la section de référence, les bords d'assemblage de la section à traiter (21) et de la section de référence présentent le même sens d'inclinaison.

9. Procédé de fabrication de la structure alvéolaire flexible selon la revendication 7, dans lequel le mode de raccordement d'un joint de fixation entre la section à traiter (21) et la section de référence comprend le soudage, le collage et l'assemblage mécanique.

10. Procédé de fabrication d'une structure alvéolaire flexible, **caractérisé en ce que** ladite structure alvéolaire flexible est celle visée dans l'une quelconque des revendications 1 à 6, et **en ce que** le procédé de fabrication de ladite structure alvéolaire flexible comprend l'impression 3D, l'usinage CNC et le moulage.
